# EUROPÄISCHE PATENTSCHRIFT

(11) **EP 1 813 143 B1**
(45) Veröffentlichungstag und Bekanntmachung des Hinweises auf die Patenterteilung: **05.04.2017**
(21) Anmeldenummer: 06124458.8
(22) Anmeldetag: 21.11.2006
(51) Int. Cl.: A01D 41/127, G07C 5/08

(54) **Anzeigeeinheit antriebsspezifischer Zustandsinformationen auf einem landwirtschaftlich nutzbaren Motorfahrzeug**
Display unit of drive specific status information on an agricultural motor vehicle
Unité de signalisation d'informations d'état spécifiques à l'entraînement sur un véhicule à moteur utilitaire agricole

(30) Priorität: 31.01.2006 DE 102006004717
(43) Veröffentlichungstag der Anmeldung: 01.08.2007
(73) Patentinhaber: CLAAS Selbstfahrende Erntemaschinen GmbH, 33428 Harsewinkel (DE)
(72) Erfinder: Hugenroth, Ludger, 48346 Ostbevern (DE); Twiefel, Herbert, 33428 Harsewinkel (DE); Isfort, Heinrich, 48249 Dülmen (DE)

(56) Entgegenhaltungen:
- GB-A- 2 320 328
- US-A- 5 978 720
- US-A1- 2002 107 625
- US-A1- 2006 020 402
- US-A1- 2006 276 949

## Beschreibung

Die Erfindung betrifft eine Anzeigeneinheit zur Anzeige von antriebsspezifischen Zustandsinformationen auf einem landwirtschaftlich nutzbaren Motorfahrzeug nach dem Oberbegriff der Patentansprüche 1 und 7.

Aufgrund des allgemeinen Strukturwandels in der Landtechnik und der immer größeren Dimensionierung von Ackerflächen erfordert dies immer größere, schnellere und leistungsfähigere Landmaschinen, um diesen neuen Herausforderungen gerecht zu werden.

Bereits aus der DE 1 780 052 ist ein landwirtschaftlich nutzbares Motorfahrzeug mit zwei Antriebseinheiten bekannt, wobei jede der beiden Antnebseinheiten derart angeordnet ist, dass sich im echten Ein-Mann-Betrieb eine größtmögliche Flächenleistung beim Anbau von Geräten oder Maschinen an dieses Motorfahrzeug erzielen lässt. Zwecks Leistungsausgleichs zwischen beiden Antriebseinheiten ist vorgesehen, dass die beiden Antriebseinheiten wahlweise miteinander kuppelbar sind sowie unter bestimmten Betriebsverhältnissen die Leistung beider Antriebsmaschinen wahlweise gemeinsam oder getrennt nutzbar ist. Zur Steuerung der zwei Antriebseinheiten sind dabei im Fahrerstand zwei spiegelbildlich zueinander angeordnete Steuerpulte und ein schwenkbarer Sitz vorgesehen.

Nachteilig an dieser Ausführungsform ist, dass der Betreiber eines solchen landwirtschaftlich nutzbaren Motorfahrzeuges mit zwei Antriebseinheiten zwei separate Steuer-/Anzeigeneinheiten wahrend des Betriebes des Motorfahrzeuges im Blickfeld behalten muss, was aufgrund der vielen weiteren vom Bediener des landwirtschaftlichen Motorfahrzeuges zu verarbeitenden Informationen, zu dessen Überforderung führen kann.

Eine weitere landtechnische Arbeitsmaschine mit einer baukastenartigen, maschinellen Grundausrüstung, die den raschen und vielfältigen Aufbau aller in einer modernen Landtechnik benötigter, selbstfahrender Geräte und Gerätekombinationen vom einfachen Transportwagen bis hin zum Mähdrescher, ermöglicht und zwei über ein Kupplungsstück miteinander verbundene Antriebseinheiten aufweist, ist in der DE 30 49 055 A1 offenbart. Aber auch bei dieser Ausführungsform wird nicht problematisiert, wie dem Bediener dieser doppelmotorigen landtechnischen Arbeitsmaschine die Zustandsdaten der beiden Antriebseinheiten in eine für den Bediener schnell die notwendigen Zustandsdaten erfassenden Weise dargestellt werden. Eine landwirtschaftlich Arbeitsmaschine ist aus Dokument US-A-5978720 bekannt. Der vorliegenden Erfindung liegt daher die Aufgabe zugrunde, die im Stand der Technik beschriebenen Nachteile zu vermeiden. Zum einen soll der Bediener des landwirtschaftlich nutzbaren Motorfahrzeuges mit wenigstens zwei Antriebseinheiten gut über die antriebsspezifischen Zustandsinformationen informiert werden, andererseits aber nicht durch zu viele Zustandsinformationen auf zu engem Raum überfordert werden.

Erfindungsgemäß wird die Aufgabe durch ein landwirtschaftliches Motorfahrzeug mit den kennzeichnenden Merkmalen der Patentansprüche 1 und 7 gelöst.

Indem dem Bediener der landwirtschaftlichen Arbeitsmaschine die antriebsspezifischen Zustandsinformationen wenigstens einer Antriebseinheit angezeigt werden und wobei die wenigstens eine angezeigte antriebsspezifische Zustandsinformation die kritischere der an den wenigstens zwei Antriebseinheiten in einer Vielzahl vorliegenden Zustandsinformationen bildet, kann gewährleistet werden, dass dem Bediener der landwirtschaftlichen Arbeitsmaschine nur jeweils der kritischere der korrelierenden antriebsspezifischen Zustandsinformationen angezeigt wird, wodurch vorteilhaft eine Überforderung des Bedieners vermieden werden kann, selbst wenn sich die wenigstens zwei Antriebseinheiten im Betrieb befinden.

In vorteilhafter Ausgestaltung der Erfindung wird dem Betreiber ausschließlich nur die kritischste antriebspezifische Zustandsinformation angezeigt. so dass der Betreiber durch die fehlende Anzeige der weiteren antriebspezifischen Zustandsinformationen weiter entlastet wird und seinen Focus auf das Steuern und Betreiben des Motorfahrzeuges richten kann.

Indem dem Betreiber nur der jeweils kritischere Wert der antriebsspezifischen Zustandsinformationen angezeigt wird, ist der Betreiber ständig ausreichend über den Zustand der wenigstens zwei Antriebseinheiten informiert, ohne alle antriebsspezifischen Zustandsinformationen im Blick haben zu müssen.

In vorteilhafter Weiterbildung der Erfindung umfassen die antriebsspezifischen Zustandsinformationen wenigstens den Füllstand Motoröl, den Motoröldruck und die Kühlwassertemperatur, so dass der Betreiber des Motorfahrzeuges über die wichtigsten, für einen störungsfreien Betrieb der wenigstens zwei Antriebseinheiten aussagekräftigen Zustandsinformationen informiert ist.

Indem beim Vorliegen wenigstens einer kritischer Zustandsinformation eine akustische oder optische Hervorhebung erfolgt, kann der Betreiber des Motor fahrzeuges umgehend reagieren und notfalls die betreffende Antriebseinheit abschalten, so dass Schaden an den Antriebseinheiten vermieden werden können.

In vorteilhafter Ausgestaltung der Erfindung sind die erfassten antriebsspezifischen Zustandsinformationen manuell oder automatisch abspeicherbar, so dass bei Fehlerauswertungen der Antriebseinheiten auf diese abgespeicherten Zustandsinformationen zurückgegriffen werden kann.

Besonders effizient erweist sich die Erfindung, wenn das Steuergerät mit Antriebszustandssensoren und/oder Antriebszustandsdaten beinhaltende Steuergeräte verbunden ist, wodurch vorteilhaft auf alle relevanten Antriebszustandsdaten zugegriffen werden kann. Vorzugsweise sind dabei im Steuergerät Sollwerte und Prüfprozeduren abgelegt, so dass die Antriebszustandsdaten mit den Sollwerten vergleichbar sind bzw. einzelne Komponenten der Antriebseinheiten auf ihre Funktionalität geprüft werden können, wobei die erfassten Antriebszustandsdaten dann auf der Bedien- und Anzeigeneinheit anzeigbar sind.

Dadurch, dass die Zustandsinformation als Symbol der vorhandenen Aggregate oder Aggregatteile dargestellt sind und durch dem Symbol zugeordneter Leuchtanzeigen der Betriebszustand anzeigbar ist, dass durch eingeschaltete Leuchtanzeige der Betrieb und durch ausgeschaltete Leuchtanzeige der Außerbetrieb angezeigt wird, kann der Betreiber die Zustandsinformationen auf einfache Weise lokalisieren und sich ständig über deren Betrieb oder Außerbetrieb informieren.

Weitere vorteilhafte Ausgestaltungen sind Gegenstand weiterer Unteransprüche und werden nachfolgend anhand der Zeichnung 1 näher erläutert. Es zeigt:

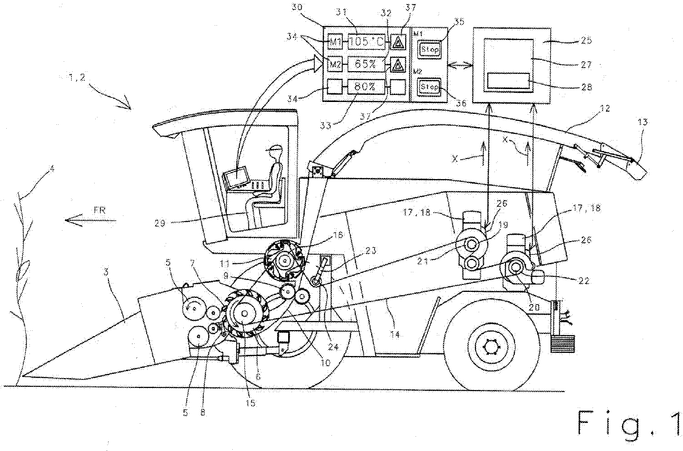

- Figur 1: einen selbstfahrenden Feldhäcksler mit einem Vorsatzgerat und zwei Antriebseinheiten in Seitenansicht und Schnittdarstellung

Figur 1 zeigt ein als selbstfahrender Feldhäcksler 1 ausgeführtes landwirtschaftlich nutzbares Motorfahrzeug 2 in Seitenansicht und Schnittdarstellung. Fronseitig in Fahrtrichtung FR gesehen ist dem Feldhäcksler 1 ein Vorsatzgerät 3 zugeordnet, welches im Arbeitsbetrieb des Feldhäckslers 1 das Erntegut 4 aufnimmt, gegebenenfalls zerkleinert und den nachfolgenden Einzugs- und Vorpresswalzen 5 zuführt. Die Einzugs- und Vorpresswalzen 5 leiten das Erntegut 4 der nachgeordneten und rotierenden Häckseltrommel 6 zu, deren umlaufenden Häckselmesser 7 das Erntegut 4 an einer Gegenschneide 8 zerkleinern. Das zerkleinerte Erntegut 4 wird sodann an eine Nachzerkleinerungseinrichtung 9 übergeben, die die Erntegutkörner, wie beispielsweise Mais. anschlägt und über einen Förderschacht 10 an einen Nachbeschleuniger 11 übergibt. Der Nachbeschleuniger 11 beschleunigt das zerkleinerte Erntegut 4 und fördert es über einen horizontal und vertikal verstellbaren Auswurfkrümmer 12 und eine diesem verschwenkbar zugeordnete Auswurfkrümmerklappe 13 zur Regelung der Wurfweite des Erntegutstrahls auf eine nicht abgebildete, dem Auswurfkrümmer 12 zugeordnete Transportvorrichtung.

Im dargestellten Ausführungsbeispiel sind die Häckseltrommel 6 und der Nachbeschleuniger 11 über einen gemeinsamen Antriebsriemen 14 und diesem zugeordnete Riemenscheiben 15, 16 mit zwei als Dieselmotoren gleicher oder unterschiedlicher Leistungsklassen ausgeführten Antriebseinheiten 17, 18 verbunden. Den Antriebseinheiten 17, 18 sind an sich bekannte und deshalb nicht näher beschriebene Schaltkupplungen 19, 20 zugeordnet, mittels derer die Antriebseinheiten 17, 18 in noch näher zu beschreibender Weise zu- oder abgeschaltet werden können. Im dargestellten Ausführungsbeispiel sind die Schaltkupplungen 19, 20 unmittelbar in die den Antriebseinheiten 17, 18 zugeordneten Riemenscheiben 21, 22 integriert. Zur schlupfarmen Übertragung der Antriebsenergie wird der Antriebsriemen 14 dauerhaft von einer oder mehreren Spanneinrichtungen 23 über Spannrollen 24 vorgespannt. Zudem werden in an sich bekannter und deshalb nicht dargestellter Weise das Vorsatzgerät 3, die der Häckseltrommel 6 vorgeordneten Einzugs - und Vorpresswalzen 5 und die Nachzerkleinerungseinrichtung 8 von den Antriebseinheiten 17, 18 angetrieben.

Erfindungsgemäß werden dem Betreiber 29 des landwirtschaftlich nutzbaren Motorfahrzeuges 2 die antriebsspezifischen Zustandsinformationen wenigstens einer Antriebseinheit 17, 18 auf der Bedien- und Anzeigeneinheit 30 optisch angezeigt. wobei die wenigstens eine angezeigte antriebsspezifische Zustandsinformation die kritischere der an den wenigstens zwei Antriebseinheiten 17, 18 in einer Vielzahl vorliegenden Zustandsinformationen bildet. Eine besondere Entlastung erfährt der Betreiber 29, wenn ihm ausschließlich nur die kritischste Zustandsinformation angezeigt wird. Denkbar ist auch, dass dem Betreiber 29 jeweils der krttischere Wert jeder antriebsspezifischen Zustandsinformation angezeigt wird. so dass er ausreichend über den Zustand der wenigstens zwei Antriebseinheiten 17, 18 informiert ist, ohne jedoch alle Zustandsinformationen im Blick haben zu müssen. Im Ausführungsbeispiel bilden der Füllstand Motorenöl, der Motoröldruck und die Kühlwassertemperatur die antriebsspezifischen Zustandsinformationen. Dabei ist dem landwirtschaftlich nutzbaren Motorfahrzeug 2 ein elektromotorisch, elektrohydraulisch oder elektronisch arbeitendes Steuergerät 25 zugeordnet, das so ausgelegt und mit den Antriebseinheiten 17, 18 verbundnen ist, dass es die antriebsspezifischen Zustandsinformationen der einzelnen Antriebseinheiten 17. 18 ermitteln und wiederabrufbar speichern kann. Es liegt im Rahmen der Erfindung, dass das Steuergerät 25 unmittelbar mit den Motorsteuerungen 26 der Antriebseinheiten 17, 18 gekoppelt ist und von diesen sogenannte Antriebszustandssignale X wie der Füllstand Motoröl, der Motoröldruck und die Kühlwassertemperatur empfängt Aufgrund eines Abgleichs mit den im Steuergerät 25 hinterlegten Sollwerten 27 und Prüfprozeduren 28 wird aus den jeweils korrelierenden Zustandsinformationen der kritischere Zustandswert herausgefiltert und zur im Sichtbereich des Betreibers 29 liegenden Bedien- und Anzeigeneinheit 30 weitergeleitet und optisch dargestellt. Im Ausführungsbeispiel umfasst die Bedien- und Anzeigeneinheit 30, über die verschiedenste hier nicht weiter aufgeführte Zustandsinformationen der Antriebseinheiten 17, 18 anzeigbar sind, ein Anzeigefeld "Kühlwassertemperatur" 31, ein Anzeigefeld "Füllstand Motoröl" 32 sowie ein Anzeigefeld "Motoröldruck" 33. Die in diesen Anzeigefeldern 31, 32, 33 visualisierten Parameter werden in an sich bekannter und deshalb nicht dargestellter Weise generiert. Je nach Ausgestaltung der Bedien- und Anzeigeneinheit 30, können die Anzeigefelder als Balkendiagramme aber auch als numerische bzw. alphanumerische Angaben vorgesehen sein. Hat das Steuergerät 25 außerhalb des Sollwertbereichs 27 liegende kritische Zustandsinformationen erfasst, so wird ein piktogrammförmiges "Achtung-Zeichen" 37 an das zugehörige Anzeigenfeld 31 bis 33 eingeblendet. Im dargestellten Beispiel sind also zwei außerhalb des Sollwertbereichs 27 liegende kritische Zustandsinformationen, die Kühlwassertemperatur 31 und der Füllstand Motoröl 32 erfasst worden, die auch manuell vom Betreiber 29 und/oder automatisch über das Steuergerät 25 zur Unterstützung der späteren Fehleranalyse abgespeichert werden können. Neben den Anzeigefeldem 31, 32. 33 befindet sich jeweils ein weiteres Anzeigefeld 34, welches im Falle, dass eine antriebsspezifische Zustandsinformation einen vorgegebenen Sollwertbereich 27 verlässt, dem Betreiber 29 optisch die dazugehörige Antriebseinheit 17, 18 beispielhaft als M1 oder M2 visuell anzeigt. Im dargestellten Bespiel zeigt das Anzeigefeld 34, dass sich die kritische, außerhalb des Sollwertbereichs 27 liegende Kühlwassertemperatur 31 auf die Antriebseinheit 17, 18 M1 bezieht, sowie dass sich der kritische Füllstand Motoröl 32 auf die Antriebseinheit M2 bezieht. Im Rahmen der Erfindung liegt es, beim Vorliegen von außerhalb des Sollwertbereiches 27 liegenden kritischen Zustandsinformationen dem Betreiber 29 zusätzliche akustische Hinweise zu geben Möchte der Betreiber 29 nun schnellstmöglich auf diese kritische Fehlermeldung reagieren, stehen ihm beispielhaft zwei weitere als Touch-Screen ausgebildete Anzeigefelder 35, 36 zur Verfügung. Diese Anzeigefelder 35, 36 sind im Ausführungsbeispiel als "Stop-Taste M1" und als "Stop-Taste M2" ausgeführt. Durch berühren dieser "Stop-Tasten" 35, 36 kann der Betreiber 29 manuell die einen außerhalb des Sollwertbereichs 27 liegenden Zustandswert aufweisende Antriebseinheit 17, 18, hier M1 und M2. abschalten Vorzugsweise kann das Abschalten der betreffenden Antriebseinheit 17, 18 auch automatisch über das Steuergerät 25 erfolgen. Denkbar ist auch, dass das Steuergerät 25 automatisch auf die unkritische Antriebszustandsinformationen aufweisende Antriebseinheit 17, 18 umschaltet, wenn eine Antriebseinheit 17, 18 aufgrund des Vorliegens außerhalb des Sollwertbereichs liegenden Zustandsinformationen abgeschaltet wurde.

Vorteilhaft, jedoch hier nicht näher dargestellt, können die antriebsspezifischen Zustandsinformationen als Symbol der vorhanden Aggregate bzw. Aggrogatteile dargestellt sein, wobei durch dem Symbol zugeordnete Leuchtanzeigen der Betriebszustand anzeigbar ist, so dass dem Betreiber 29 bei eingeschalteter Leuchtanzeige der Betrieb und durch ausgeschalteter Leuchtanzeige der Außerbetrieb angezeigt wird.

Denkbar ist zudem, dass dem Steuergerät 25 eine Spracherkennungseinheit als Eingabeeinheit zugeordnet ist, wodurch der Betreiber 29 seinen Blick nicht auf eine Bedien- und Anzeigeneinheit 30 konzentrieren muss, was vorteilhaft eine weitere Entlastung des Betreibers 29 bedeutet.

Es liegt im Rahmen des Könnens des Fachmanns das beschriebene Verfahren und die Vorrichtung in nicht dargestellter Weise abzuwandeln oder in anderen als den dargestellten Anwendungsfällen einzusetzen, um die beschriebenen Effekte zu erzielen, ohne dabei den Rahmen der Erfindung zu verlassen,

**Bezugszeichenliste**

| | | | |
|---|---|---|---|
| 1 | Feldhäcksler | 32 | Anzeigefeld "Füllstand Motoröl" |
| 2 | Motorfahrzeug | 33 | Anzeigefeld "Motoröldruck" |
| 3 | Vorsatzgerät | 34 | Anzeigefeld "M1/M2" |
| 4 | Erntegut | 35 | Anzeigefeld "Stop M1" |
| 5 | Einzugs- und Vorpresswalzen | 36 | Anzeigefeld "Stop M2" |
| 6 | Häckseltrommel | 37 | Piktogramm "Achtung Zeichen" |
| 7 | Häckselmesser | | |
| 8 | Gegenschneide | X | Antriebszustandssignal |
| 9 | Nachzerkleinerungseinrichtung | | |
| 10 | Förderschacht | | |
| 11 | Nachbeschleuniger | | |
| 12 | Auswurfkrümmer | | |
| 13 | Auswurfkrümmerklappe | | |
| 14 | Antriebsriemen | | |
| 15 | Riemenscheibe | | |
| 16 | Riemenscheibe | | |
| 17 | Antriebseinheit | | |
| 18 | Antriebseinheit | | |
| 19 | Schaltkupplung | | |
| 20 | Schaltkupplung | | |
| 21 | Riemenscheibe | | |
| 22 | Riemenscheibe | | |
| 23 | Spanneinrichtung | | |
| 24 | Spannrolle | | |
| 25 | Steuereinrichtung | | |
| 26 | Motorsteuerung | | |
| 27 | Sollwerte | | |
| 28 | Prüfprozeduren | | |
| 29 | Betreiber | | |
| 30 | Bedien- und Anzeigeneinheit | | |
| 31 | Anzeigefeld "Kühlwassertemperatur" | | |

## Patentansprüche

1. Verfahren zur Anzeige von antriebsspezifischen Zustandsinformationen auf einem landwirtschaftlich nutzbaren Motorfahrzeug (2) mit wenigstens zwei **Antriebsmotoren** (17, 18) und wobei das Motorfahrzeug (2) eine Bedien- und Anzeigeneinheit (30) und ein Steuergerät (25) umfasst, wobei das Steuergerät (25) auf antriebsspezifische Zustandsinformationen zugreifen kann,
**dadurch gekennzeichnet,**
**dass** dem Betreiber (29) des landwirtschaftlich nutzbaren Motorfahrzeuges (2) die antriebsspezifischen Zustandsinformationen wenigstens eines **Antriebsmotors** (17, 18) angezeigt werden und wobei die wenigstens eine angezeigte antriebsspezifische Zustandsinformation nur die kritischere der an den wenigstens zwei **Antriebsmotoren** (17, 18) in einer Vielzahl vorliegender Zustandsinformationen angezeigt wird.

2. Verfahren zur Anzeige von antriebsspezifischen Zustandsinformationen nach Anspruch 1,
**dadurch gekennzeichnet,**
**dass** dem Betreiber nur ausschließlich die kritischste antriebspezifische Zustandsinformation angezeigt wird.

3. Verfahren zur Anzeige von antriebsspezifischen Zustandsinformationen nach einem der vorhergehenden Ansprüche,
**dadurch gekennzeichnet,**
**dass** dem Betreiber jeweils der kritischere Wert jeder antriebsspezifischen Zustandsinformation angezeigt wird.

4. Verfahren zur Anzeige von antriebsspezifischen Zustandsinformationen nach einem der vorhergehenden Ansprüche
**dadurch gekennzeichnet,**
**dass** die antriebsspezifischen Zustandsinformationen der Füllstand des Motoröls, der Motoröldruck und die Kühlwassertemperatur sein können

5. Verfahren zur Anzeige von antriebsspezifischen Zustandsinformationen nach einem der vorhergehenden Ansprüche,
**dadurch gekennzeichnet,**
**dass** beim Vorliegen von wenigstens einer kritischen außerhalb eines Sollwertbereichs liegenden antriebsspezifischen Zustandsinformation eine akustische und/oder optische Hervorhebung erfolgt.

6. Verfahren zur Anzeige von antriebsspezifischen Zustandsinformationen nach einem der vorhergehenden Ansprüche,
**dadurch gekennzeichnet,**
**dass** die erfassten antriebsspezifischen Zustandsinformationen manuell oder automatisch abspeicherbar sind.

7. Vorrichtung zur Anzeige von antriebsspezifischen Zustandsinformationen auf einem landwirtschaftlich nutzbaren Motorfahrzeug (2) mit wenigstens zwei **Antriebsmotoren** (17, 18) und wobei das Motorfahrzeug (2) eine Bedien- und Anzeigeneinheit (30) und ein Steuergerät (25) umfasst, wobei das Steuergerät (25) auf antriebsspezifische Zustandsinformationen der **Antriebsmotoren** (17, 18) zugreifen kann,
**dadurch gekennzeichnet,**
**dass** das Steuergerät (25) mit Antriebszustandssensoren und/oder Antriebszustandsinformationen **der Antriebsmotoren (17, 18)** beinhaltenden Steuergeräten verbunden ist, im Steuergerät (25) Sollwerte (27) und Prüfprozeduren (28) abgelegt sind, die Antriebszustandsinformationen der **Antriebsmotoren (17, 18)** mit den Sollwerten (27) vergleichbar sind und auf der Bedien- und Anzeigeneinheit (30) in verschiedenen Funktionsebenen darstellbar sind, wobei über die Bedien- und Anzeigeneinheit (30) die dargestellte Funktionsebene veränderbar ist.

8. Vorrichtung zur Anzeige von antriebsspezifischen Zustandsinformationen nach Anspruch 7,
**dadurch gekennzeichnet,**
**dass** die Zustandsinformationen als Symbol der vorhandenen Aggregate oder Aggregatteile dargestellt sind und durch dem Symbol zugeordneter Leuchtanzeigen der Betriebszustand anzeigbar ist, dass durch eingeschaltete Leuchtanzeige der Betrieb und durch ausgeschaltete Leuchtanzeige der Außerbetrieb angezeigt wird.

9. Vorrichtung zur Anzeige von antriebsspezifischen Zustandsinformationen nach den Ansprüchen 7 bis 8,
**dadurch gekennzeichnet,**
**dass** dem Steuergerät eine Spracherkennungseinheit als Eingabeeinheit zugeordnet ist.

10. Vorrichtung zur Anzeige von antriebsspezifischen Zustandsinformationen nach den Ansprüchen 7 bis 9,
**dadurch gekennzeichnet,**
**dass** die Bedien- und Anzeigeneinheit (30) als Touch-Screen ausgebildet ist.

## Claims

1. A method of displaying drive-specific status information on a motor vehicle (2) which can be used in agriculture, having at least two drive engines (17, 18) and wherein the motor vehicle (2) includes an operating and display unit (30) and a control device (25), wherein the control device (25) can access drive-specific status information,
**characterised in that**
the drive-specific status information of at least one drive engine (17, 18) is displayed to the operator (29) of the motor vehicle (2) which can be used in agriculture and wherein the at least one item of displayed drive-specific status information is only the more critical one of the items of status information present in a multiplicity at the at least two drive engines (17, 18).

2. A method of displaying drive-specific status information according to claim 1 **characterised in that** only exclusively the most critical drive-specific status information is displayed to the operator.

3. A method of displaying drive-specific status information according to one of the preceding claims **characterised in that** the more critical value of each drive-specific status information item is respectively displayed to the operator.

4. A method of displaying drive-specific status information according to one of the preceding claims **characterised in that** the drive-specific status information can be the filling level of the engine oil, the engine oil pressure and the coolant temperature.

5. A method of displaying drive-specific status information according to one of the preceding claims **characterised in that** acoustic and/or optical emphasis is effected when at least one critical drive-specific item of status information which is outside a reference value range occurs.

6. A method of displaying drive-specific status information according to one of the preceding claims **characterised in that** the detected drive-specific status information can be manually or automatically stored.

7. Apparatus for displaying drive-specific status information on a motor vehicle (2) which can be used in agriculture, having at least two drive engines (17, 18) and wherein the motor vehicle (2) includes an operating and display unit (30) and a control device (25), wherein the control device (25) can access drive-specific status information of the two drive engines (17, 18),
**characterised in that** the control device (25) is connected to drive status sensors and/or control devices containing drive status information of the drive engines (17, 18), reference values (27) and test procedures (28) are stored in the control device (25), the drive status information item of the drive engines (17, 18) are comparable to the reference values (27) and can be represented on the operating and display unit (30) in various functional planes, wherein the represented functional plane can be altered by way of the operating and display unit (30).

8. Apparatus for displaying drive-specific status information according to claim 7 **characterised in that** the status information is represented as a symbol of the present assemblies or assembly parts and the operating status can be displayed by light displays associated with the symbol, and the operative mode is displayed by a switched-on light display and the inoperative mode is displayed by a switched-off light display.

9. Apparatus for displaying drive-specific status information according to claims 7 and 8 **characterised in that** a speech recognition unit is associated as an input unit with the control device.

10. Apparatus for displaying drive-specific status information according to claims 7 to 9 **characterised in that** the operating and display unit (30) is in the form of a touch screen.

## Revendications

1. Procédé d'affichage d'informations d'état spécifiques à l'entraînement sur un véhicule utilitaire agricole à moteur (2) doté d'au moins deux moteurs d'entraînement (17, 18), le véhicule à moteur (2) comprenant une unité de commande et d'affichage (30) et un module de commande (25), lequel module de commande (25) peut accéder à des informations d'état spécifiques à l'entraînement, **caractérisé en ce que** les informations d'état spécifiques à l'entraînement d'au moins un moteur d'entraînement (17, 18) sont affichées pour l'utilisateur (29) du véhicule utilitaire agricole à moteur (2), seule la plus critique de la pluralité des informations d'état présentes auxdits au moins deux moteurs d'entraînement (17, 18) étant affichée en tant que la au moins une information d'état spécifique à l'entraînement affichée.

2. Procédé d'affichage d'informations d'état spécifiques à l'entraînement selon la revendication 1, **caractérisé en ce que** seule l'information d'état spécifique à l'entraînement la plus critique est affichée pour l'utilisateur.

3. Procédé d'affichage d'informations d'état spécifiques à l'entraînement selon l'une des revendications précédentes, **caractérisé en ce que** la valeur la plus critique de chaque information d'état spécifique à l'entraînement est chaque fois affichée à l'utilisateur.

4. Procédé d'affichage d'informations d'état spécifiques à l'entraînement selon l'une des revendications précédentes, **caractérisé en ce que** les informations d'état spécifiques à l'entraînement peuvent être le niveau de remplissage de l'huile moteur, la pression d'huile moteur et la température de l'eau de refroidissement.

5. Procédé d'affichage d'informations d'état spécifiques à l'entraînement selon l'une des revendications précédentes, **caractérisé en ce qu'**une signalisation acoustique et/ou optique a lieu en présence d'au moins une information d'état spécifique à l'entraînement critique située en dehors d'une plage de valeurs de consigne.

6. Procédé d'affichage d'informations d'état spécifiques à l'entraînement selon l'une des revendications précédentes, **caractérisé en ce que** les informations d'état spécifiques à l'entraînement détectées sont mémorisables manuellement ou automatiquement.

7. Dispositif d'affichage d'informations d'état spécifiques à l'entraînement sur un véhicule utilitaire agricole à moteur (2) doté d'au moins deux moteurs d'entraînement (17, 18), le véhicule à moteur (2) comprenant une unité de commande et d'affichage (30) et un module de commande (25), lequel module de commande (25) peut accéder à des informations d'état spécifiques à l'entraînement des moteurs d'entraînement (17, 18), **caractérisé en ce que** le module de commande (25) est relié à des capteurs d'état de l'entraînement et/ou à des modules de commande contenant des informations d'état de l'entraînement des moteurs d'entraînement (17, 18), **en ce que** des valeurs de consigne (27) et des procédures de contrôle (28) sont stockées dans le module de commande (25), **en ce que** les informations d'état de l'entraînement des moteurs d'entraînement (17, 18) peuvent être comparées avec les valeurs de consigne (27) et être représentées sur l'unité de commande et d'affichage (30) dans différents niveaux de fonction, le niveau de fonction représenté étant modifiable par l'intermédiaire de l'unité de commande et d'affichage (30).

8. Dispositif d'affichage d'informations d'état spécifiques à l'entraînement selon la revendication 7, **caractérisé en ce que** les informations d'état sont représentées sous forme de symbole des ensembles ou sous-ensembles présents, et l'état de fonctionnement peut être affiché par des voyants lumineux associés au symbole, et **en ce que** l'état en service est indiqué par un voyant lumineux allumé et l'état hors service par un voyant lumineux éteint.

9. Dispositif d'affichage d'informations d'état spécifiques à l'entraînement selon les revendications 7 à 8, **caractérisé en ce qu'**une unité de reconnaissance vocale est associée au module de commande en tant qu'unité d'entrée.

10. Dispositif d'affichage d'informations d'état spécifiques à l'entraînement selon les revendications 7 à 9, **caractérisé en ce que** l'unité de commande et d'affichage (30) est réalisée sous la forme d'un écran tactile.
